# EUROPÄISCHE PATENTSCHRIFT

(11) **EP 3 823 219 B1**
(45) Veröffentlichungstag und Bekanntmachung des Hinweises auf die Patenterteilung: **18.03.2026**
(21) Anmeldenummer: 20213850.9
(22) Anmeldetag: 13.10.2017
(51) Int. Cl.: H04L 12/46, H04L 12/28

(54) **ANORDNUNG MIT EINEM ENDGERÄT UND EINER HANDBEDIENUNG UND VERFAHREN ZUR BEDIENUNG DES ENDGERÄTS**
ARRANGEMENT WITH AN END DEVICE AND A MANUAL CONTROL AND METHOD FOR OPERATING THE END DEVICE
AGENCEMENT DOTÉ D'UN TERMINAL ET D'UNE COMMANDE MANUEL ET PROCÉDÉ DE FONCTIONNEMENT DU TERMINAL

(30) Priorität: 14.10.2016 DE 102016119618
(43) Veröffentlichungstag der Anmeldung: 19.05.2021
(62) Teilanmeldung aus: 17784273.9
(73) Patentinhaber: ABB Schweiz AG, 5400 Baden (CH)
(72) Erfinder: Winnewisser, Christian, 69115 Heidelberg (DE)
(74) Vertreter: Zimmermann & Partner Patentanwälte mbB

(56) Entgegenhaltungen:
- DE-A1- 102014 103 367
- ANONYMOUS: "MAC-Adresse - Wikipedia - Version vom 8. Juli 2016", 8 July 2016 (2016-07-08), XP055788929, Retrieved from the Internet <URL:https://de.wikipedia.org/w/index.php?title=MAC-Adresse&oldid=155964461> [retrieved on 20210323]
- ANONYMOUS ET AL: "KNX Application Domain specific Standards - Logical Tag Extended", 1 January 1999 (1999-01-01), pages 1 - 114, XP055576363, Retrieved from the Internet <URL:https://my.knx.org/> [retrieved on 20190402]

## Beschreibung

Die Erfindung betrifft ein Verfahren zum Bedienen, Einrichten, Inbetriebnehmen und/ oder Testen eines Endgeräts, welches in der Gebäudetechnik verwendet wird, nach dem Oberbegriff des Patentanspruchs 1.

Aus der DE 10 2014 103 367 A1 ist es bekannt, dass eine Steuereinheit mit einer Aktoreinheit kommunizieren kann, wobei die Aktoreinheit zunächst an der Steuereinheit angemeldet werden muss, wobei die Anmeldung dadurch erfolgt, dass eine eindeutige Adresse, wie eine IPv6 Netzwerkadresse, in der Steuereinheit eingegeben wird.

Aus der Quelle "MAC-Adresse - Wikipedia - Version vom 8. Juli 2016", (20160708), URL: https://de.wikipedia.org/w/index.php?title=MAC-Adresse&oldid=155964461, (20210323), XP055788929 [A] "Ermitteln und Vergabe einer MAC-Adresse", Seite 3, ist es bekannt, in einer Seriennummer eine MAC-Adresse, nämlich eine Hardware-Adresse jedes einzelnen Netzwerkadapters, die als eindeutiger Identifikator des Geräts in einem Rechnernetz dient, zu integrieren.

Aus Anonymous ET AL: "KNX Application Domain specific Standards - Logical Tag Extended", XP055576363 ist es bekannt, dass ein Bericht die Seriennummer eines Senders enthält.

Endgeräte, die beispielsweise an ein KNX-System angeschlossen sind, umfassen üblicherweise eine Handbedienung. Insbesondere Ein- und Anzeigegeräte können eine Handbedienung aufweisen. Die Handbedienung ist üblicherweise vorgesehen, um einzelne Endgeräte eines KNX-Systems bei einer Inbetriebnahme zu unterstützen.

Bei Geräten, die bislang noch keine Handbedienung aufweisen, gestaltet sich eine Bedienung allerdings als schwierig, beispielsweise beim Testen während und nach der Inbetriebnahme, zu Diagnosezwecken und zur Simulation von Ereignissen oder Zuständen.

KNX ist ein Fachbegriff für einen Feldbus zur Gebäudeautomation. In einem KNX-System wird ein solcher Feldbus für die Kommunikation von Teilnehmern des Systems verwendet.

Die Handbedienung ist in den Endgeräten selbst vorgesehen. Die Handbedienung kann mechanische Tasten, berührempfindliche Flächen und/ oder graphische Anzeigen in Form von Displays oder LEDs aufweisen.

Komplexere Endgeräte sind aufgrund eingesetzter Technik oft nur unzureichend und/ oder nicht intuitiv betätigbar.

Die Eingabe- und Anzeigemöglichkeiten sind häufig an die Größe der Endgeräte gebunden. Weiterhin entstehen Kosten für Funktionen, die meist nur einmalig während der Lebens- oder Betriebsdauer des Endgerätes verwendet werden.

Des Weiteren ist insbesondere bei Reiheneinbau-Geräten (REG) der Einbauort selten der Ort der Wirkung, so dass ein Prüfen einer Funktion bzw. Wirkung eines Endgeräts unter Umständen schwierig ist.

Der Einbauort nimmt außerdem Einfluss auf die Bedienbarkeit des Endgeräts und kann eine Handbedienung verhindern oder einschränken, beispielsweise wenn ein Endgerät an einem schwer zugänglichen Ort verbaut ist.

Außerdem sind Endgeräte, insbesondere dezentrale Steuergeräte, bekannt, deren Sensorik zum Zeitpunkt der Inbetriebnahme nicht vorhanden oder nicht nutzbar ist. Die Sensorik kann beispielsweise Tastenschnittstellen umfassen, an denen noch keine Tasterwippe angebracht ist, da es sich hier meist um hochwertige Designteile handelt, die erst nach Abschluss einer Bauphase angebracht werden.

Sensoren können zwar aktuelle Umgebungswerte liefern, aber zum Testen müssen häufig andere Größen simuliert werden. Beispielsweise müssen die Temperatur, Windstärken, CO₂ - Konzentrationen oder ähnliche Größen simuliert werden, um eine Reaktion beteiligter Endgeräte zu kontrollieren.

Der Erfindung liegt daher die Aufgabe zugrunde, ein Endgerät zuverlässig und möglichst unabhängig von dessen Konfigurierungszustand und von dessen Umgebung zu testen und/ oder in Betrieb zu nehmen.

Erfindungsgemäß wird die voranstehende Aufgabe mit den Merkmalen des Patentanspruchs 1 gelöst.

Erfindungsgemäß ist erkannt worden, dass Funktionen einer Handbedienung eines Endgeräts auch von einem externen Eingabegerät ausgeführt werden können, welches mit diesem nicht durch physikalische Leitungen oder Kabel in mechanischer Verbindung steht.

Funktionen einer Handbedienung, wie die Anzeige, Steuerung und Simulation von Betriebsfunktionen, können auf ein externes Eingabegerät ausgelagert werden. Das Eingabegerät kann insbesondere zu einem Wirkort transportiert werden, um die Wirkungen, die ein Endgerät verursacht, vor Ort unmittelbar prüfen zu können.

Weiterhin können Sensorwerte leicht simuliert werden, ohne reale Komponenten einzusetzen. Hierdurch kann ein System besser getestet werden.

Des Weiteren ist eine externe Handbedienung deutlich flexibler und damit auch einfacher handhabbar, da diese frei konfigurierbar ist und nicht durch die Anzahl oder insbesondere bauliche Anordnung der vorhandenen Ein- und Ausgabemöglichkeiten begrenzt ist.

Vorteilhaft ist das Eingabegerät als Smart Phone oder als Tablet-PC ausgestaltet. Es ist denkbar, als Eingabegerät ein Smart Phone, ein Tablet-PC oder ein ähnliches Eingabegerät zu verwenden. Ein Bediener des Endgeräts kann einmalig ein solches Eingabegerät anschaffen oder besitzt im Idealfall bereits ein solches Eingabegerät. Hierdurch können Kosten gespart werden.

Das Verfahren ermöglicht, auf Anlagen aus der Ferne zuzugreifen, insbesondere auf Anlagen, die zum Zeitpunkt des Zugriffs noch gar nicht oder nur unvollständig konfiguriert sind.

Neu eingebaute Endgeräte haben im Auslieferungszustand alle die gleiche Zieladresse. Diese Zieladresse kann nicht für eine Fernsteuerung oder Inbetriebnahme verwendet werden, wenn sie mehrfach in einer Anlage vorhanden ist, da keine Eindeutigkeit gegeben ist.

Vor diesem Hintergrund erfolgt das Herstellen der Verbindung, indem die Seriennummer des Endgeräts verwendet wird, um dieses eindeutig als Kommunikationspartner für das Eingabegerät festzulegen. Hierdurch ist ein Adressierungsverfahren durchführbar, bei dem keine Adressänderung in Endgeräten nötig ist. Die Adressierung der Endgeräte wird über eine Erweiterung des Adressierungsraumes mit der Seriennummer erreicht. Diese Kommunikationsart funktioniert auch im Auslieferungszustand, wenn sich die Zieladressen der Endgeräte noch nicht unterscheiden, wohl aber deren Seriennummern.

Es werden herstellerspezifische Kommunikationserweiterungen verwendet, die ein Umstellen der Zieladresse nicht nötig machen. Es werden insbesondere Telegramme im herstellerspezifischen Bereich versendet, die als Adresserweiterung die Seriennummer des Gerätes verwenden und damit eine eindeutige Zuordnung des Kommunikationspartners ermöglichen.

Hierzu können die herstellerspezifischen Erweiterungen der Application Layer Dienste "A_SystemNetworkParameter" oder "A_NetworkParameter" verwendet werden, wenn die Kommunikation über ein KNX-System erfolgt und ausreichend ist. In diese Botschaften können herstellerspezifische Botschaften oder Standardbotschaften integriert und mit der Seriennummer des Endgerätes erweitert werden.

Alle Endgeräte empfangen das gleiche Telegramm, können den Zieladressaten aber anhand der ergänzten Seriennummer ermitteln. Nur das mit der Seriennummer adressierte Endgerät verarbeitet dann das empfangene Telegramm.

Vorteilhaft erfolgt das Herstellen der Verbindung, indem in das Eingabegerät die Seriennummer des Endgeräts manuell eingegeben wird. Hierdurch wird das Verfahren als Adressierungsverfahren mit Seriennummer ausgestaltet. Diese Kommunikationsart funktioniert auch im Auslieferungszustand, wenn sich die Zieladressen der Endgeräte noch nicht unterscheiden, wohl aber deren Seriennummern. Das Eingeben der Zieladresse und der Seriennummer in das Eingabegerät stellt sicher, dass bei mehrfach vorhandenen Zieladressen die Seriennummer zum erweiterten und eindeutigen Adressieren verwendet wird.

Weiter vorteilhaft wird die Seriennummer des Endgeräts vom Eingabegerät ausgelesen, indem ein Barcode erfasst wird. Hierbei kann beispielsweise eine eingebaute Kamera im Eingabegerät verwendet werden. Eine auf dem Eingabegerät laufende Anwendung erlaubt dann, die Seriennummer des Endgerätes auszulesen. Diese Seriennummer muss sich nicht zwingend auf dem Endgerät selbst befinden. Alternativ kann die Seriennummer auch an die Stelle angebracht werden, an der eine Fernsteuerung stattfinden soll. Dies kann beispielsweise durch Aufkleber erfolgen, die mit dem Endgerät ausgeliefert werden. Mit der Seriennummer des Endgerätes, die aus dem Barcode erhalten wird, kann die Zieladresse des Endgerätes beispielsweise anhand des Dienstes "A_IndividualAddressSerialNumber_Read" (Lesen einer KNX-individuellen Adresse über Seriennummer) gefunden werden. Dies ist dann möglich, wenn ein KNX-System verwendet wird. Wenn dem Eingabegerät die Zieladresse und die Seriennummer bekannt sind, können diese zur Fernsteuerung verwendet werden.

Weiter vorteilhaft erfolgt das Herstellen der Verbindung, indem ein Broadcast-Telegramm versendet wird. Ein Broadcast-Telegramm erreicht alle Endgeräte eines Systems, ohne dass sie explizit als Empfänger angegeben sind. Ein Broadcast (englisch für "Rundruf") ist eine Nachricht, bei der Datenpakete von einem Punkt aus an alle Teilnehmer eines Nachrichtennetzes übertragen werden. Zur Fernsteuerung, Inbetriebnahme oder Diagnose einzelner Komponenten werden zwischen Eingabegerät und Endgeräte Punkt-zu-Punkt verbindungsorientierte oder verbindungslose Telegramme verwendet. Im Falle einer erweiterten Adressierung über die Seriennummer werden vorteilhaft Broadcast- oder System-Broadcast-Telegramme verwendet. Das Auffinden der Zieladresse und der Seriennummer durch ein Broadcast-Telegramm erfolgt, indem Endgeräte mit gedrückter Programmiertaste gefunden werden und die Seriennummer übertragen wird.

Weiter vorteilhaft erfolgt das Herstellen der Verbindung, indem mindestens ein Kommunikationsmedium verwendet wird, das im Eingabegerät vorgesehen ist. Als Kommunikationsmedium werden im Eingabegerät verbaute Schnittstellen wie WI-FI (Marke), Bluetooth (Marke), Near Field Communication (NFC) oder ähnliche Einrichtungen verwendet. Wird ein Kommunikationsmedium verwendet, das direkt zwischen Eingabegerät und Endgerät eine Verbindung aufbaut, beispielsweise Bluetooth (Marke) oder NFC, können direkt herstellerspezifische Kommunikationserweiterungen zur Fernsteuerung verwendet werden.

Vorteilhaft erfolgt das Herstellen der Verbindung, indem ein Medienkoppler verwendet wird. Bei Geräten, die über keine der zuvor erwähnten Schnittstellen verfügen, wird die Kommunikation mit Hilfe eines Medienkopplers, wie insbesondere eines KNX-IP-Routers und/ oder insbesondere über einen Standard WI-FI (Marke)-Access-Point mit der Gebäudetechnik hergestellt. Diese Kommunikationsart kann um herstellerspezifische Protokollergänzungen erweitert werden. Diese herstellerspezifischen Erweiterungen können bei der Durchführung des hier beschriebenen Verfahrens verwendet werden.

Auch Endgeräte, die bislang noch keine Handbedienung haben, bei denen eine Handbedienung allerdings zum Testen während und nach der Inbetriebnahme zu Diagnosezwecken und zur Simulation von Ereignissen oder Zuständen vorteilhaft wäre, könnten mit einer Handbedienung ausgerüstet werden.

Das hier beschriebene Verfahren kann als Standardverfahren durchgeführt werden, welches bei bereits konfigurierten Systemen anwendbar ist, um eine Kommunikation zwischen einzelnen Komponenten zu erreichen. Wenn ein solches Standardverfahren nicht durchführbar ist, kann das Verfahren als Adressierungsverfahren durchgeführt werden, das zu einer erfolgreichen Kommunikation führt, auch wenn ein System noch nicht konfiguriert ist.

Vorteilhaft sind die Endgeräte trotz topologischer Inkonsistenz erreichbar, also auch über noch nicht vollständig parametrierte Systemkomponenten, wie beispielsweise Koppler, hinweg. Um eine Punkt-zu-Punkt-Kommunikation durchführen zu können, müssen beide Kommunikationspartner die jeweilige Adresse des anderen Kommunikationspartners kennen, dies ist mit dem hier beschriebenen Verfahren ermöglicht.

In der Zeichnung zeigen
- Fig. 1: eine schematische Darstellung eines Ablaufs, der im Eingabegerät durchgeführt wird, um das effektivste Verfahren zur Ausführung einer Fernsteuerung zu ermitteln,
- Fig. 2: zeigt schematisch eine Punkt-zu-Punkt-Kommunikation über das gleiche Kommunikationsmedium,
- Fig. 3: zeigt schematisch eine Standard-Kommunikation über das Feldbusprotokoll,
- Fig. 4: zeigt schematisch eine Kommunikation über das Feldbusprotokoll, wobei eine temporäre Zieladresse vergeben wird, und
- Fig. 5: zeigt schematisch eine weitere Kommunikation über das Feldbusprotokoll.

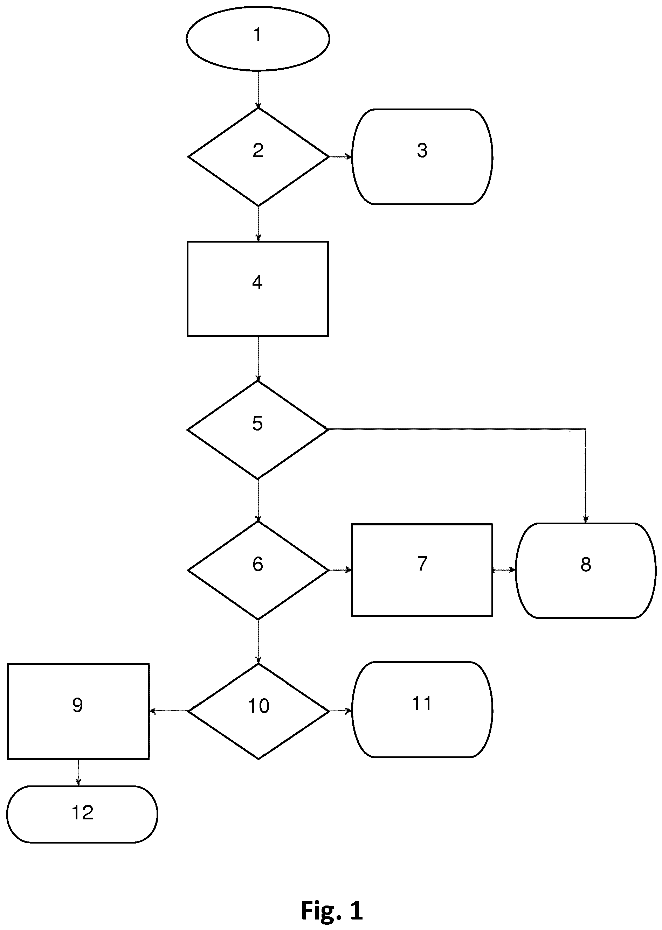

Fig. 1 zeigt anhand eines Flussdiagramms eine schematische Darstellung eines Ablaufs, der im Eingabegerät durchgeführt wird, um das effektivste Verfahren zur Ausführung einer Fernsteuerung zu ermitteln. Die in Klammern angegebenen Zahlen beschreiben den Ablauf.

Ein solches Verfahren zum Bedienen, Einrichten, Inbetriebnehmen und/ oder Testen eines Endgeräts, welches in der Gebäudetechnik verwendet wird, umfasst die folgenden Schritte:
Herstellen einer Verbindung zwischen einem Endgerät mit einer ersten Handbedienung und einem von diesem separierten Eingabegerät mit einer zweiten Handbedienung,

Bedienen der zweiten Handbedienung, um das Endgerät von einem Bedienort aus fernzusteuern und zu bedienen, der vom Aufstellort des Endgeräts entfernt ist.

Zunächst erfolgt ein Starten der zweiten Handbedienung (1). Es wird geprüft, ob eine Verbindung direkt zwischen dem Eingabegerät und dem Endgerät hergestellt werden kann (2). Falls dies möglich ist, erfolgt eine Bedienung direkt über das bereitgestellte Protokoll (3).

Falls dies nicht möglich ist, muss das genannte Verfahren unter Ausführung einer Adressierung durchgeführt werden (4).

Es wird geprüft, ob das Endgerät eine gültige Zieladresse aufweist (5). Falls dem so ist, erfolgt eine Bedienung direkt über das Verfahren mit herstellerspezifischen Erweiterungen zur Simulation der Handbedienung (8).

Falls dem nicht so ist, wird geprüft, ob das Endgerät über eine temporäre Zieladresse korrekt adressiert werden kann (6). Wenn dies möglich ist, erfolgt ein Setzen einer temporären Zieladresse im Endgerät (7) und das genannte Verfahren wird durchgeführt.

Das Herstellen der Verbindung erfolgt dann, indem durch das Eingabegerät eine temporäre Zieladresse für das Endgerät vergeben wird, um dieses eindeutig als Kommunikationspartner für das Eingabegerät festzulegen.

Falls keine temporäre Zieladresse korrekt adressiert werden kann, wird geprüft, ob das Endgerät über ein Broadcast oder ein System Broadcast erreicht werden kann (10). Falls dies nicht möglich ist, ist keine Kommunikation möglich (9). Es ist dann auch Keine Fernsteuerung möglich (12).

Falls das Endgerät über ein Broadcast oder System Broadcast erreicht werden kann, erfolgt die Bedienung direkt über eine herstellerspezifische Erweiterung des Verfahrens mit herstellerspezifischen Erweiterungen zur Simulation der Handbedienung (11).

Das Herstellen der Verbindung erfolgt, indem ein Broadcast-Telegramm versendet wird. Das Herstellen der Verbindung kann außerdem erfolgen, indem die Seriennummer des Endgeräts verwendet wird, um dieses eindeutig als Kommunikationspartner für das Eingabegerät festzulegen.

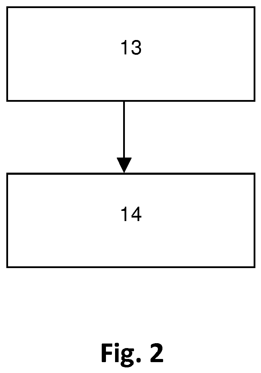

Fig. 2 zeigt eine Anordnung, umfassend mindestens ein Endgerät 14 zur Verwendung in der Gebäudetechnik, wobei das Endgerät 14 eine erste Handbedienung aufweist, mit welcher das Endgerät 14 lokal bedienbar ist.

Es ist ein Eingabegerät 13 vorgesehen, welches eine zweite Handbedienung aufweist, wobei das Endgerät 14 durch die zweite Handbedienung fernbedienbar ist und wobei das Eingabegerät 13 vom Endgerät 14 örtlich und baulich separiert ist.

Das Herstellen der Verbindung zwischen Eingabegerät 13 und Endgerät 14 erfolgt, indem das gleiche Kommunikationsmedium verwendet wird. Es erfolgt eine Kommunikation Punkt-zu-Punkt über das gleiche Kommunikationsmedium. Es können WI-FI (Marke), Bluetooth (Marke), Near Field Communication (NFC) oder ähnliche Einrichtungen verwendet werden.

Es werden außerdem herstellerspezifische Protokollerweiterungen bzw. herstellerspezifische Fernsteuerdaten verwendet.

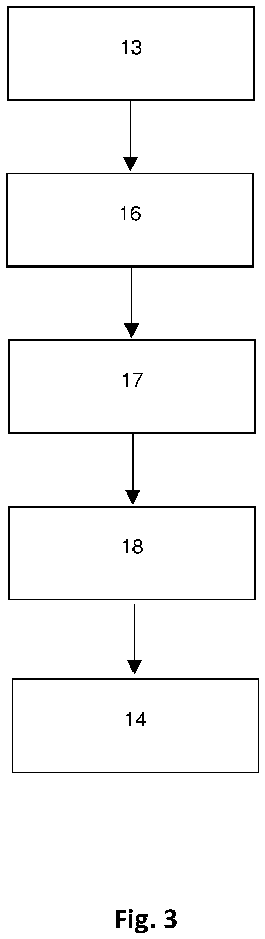

Fig. 3 zeigt schematisch eine Standard-Kommunikation über das Feldbusprotokoll.

Ein Eingabegerät 13 kann ein Kommunikationsmedium nutzen, um über einen Zugangspunkt 16 eine Verbindung mit dem Endgerät 14 herzustellen. Das Eingabegerät 13 kann einen Medienkoppler 17 nutzen, um eine Verbindung mit dem Endgerät 14 herzustellen. Das Eingabegerät 13 kann einen feldbusspezifischen Koppler 18 nutzen, um eine Verbindung mit dem Endgerät 14 herzustellen. Über eine Feldbusadressierung kann eine Verbindung zum Endgerät 14 hergestellt werden. Die Feldbusadressierung erfolgt unter Nutzung von herstellerspezifischen Fernsteuerdaten.

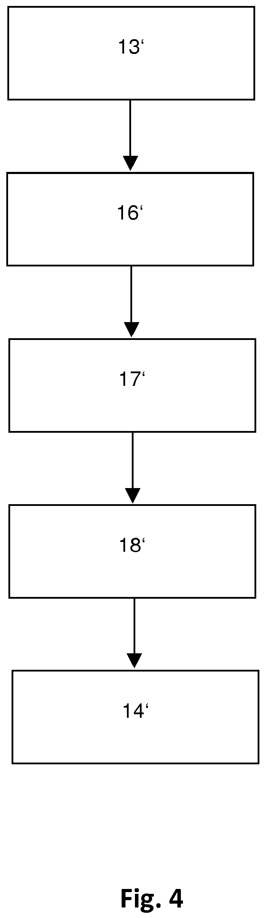

Fig. 4 zeigt schematisch eine Kommunikation über das Feldbusprotokoll, wobei eine temporäre Zieladresse vergeben wird.

Ein Eingabegerät 13' kann ein Kommunikationsmedium nutzen, um über einen Zugangspunkt 16' eine Verbindung mit dem Endgerät 14' herzustellen. Das Eingabegerät 13' kann einen Medienkoppler 17' nutzen, um eine Verbindung mit dem Endgerät 14' herzustellen. Das Eingabegerät 13' kann einen feldbusspezifischen Koppler 18' nutzen, um eine Verbindung mit dem Endgerät 14' herzustellen. Über eine Feldbusadressierung kann eine Verbindung zum Endgerät 14' hergestellt werden. Die Feldbusadressierung erfolgt unter Nutzung von herstellerspezifischen Fernsteuerdaten und der Vergabe einer temporären Zieladresse für das Endgerät 14'.

Insoweit erfolgt das Herstellen der Verbindung, indem durch das Eingabegerät 13' eine temporäre Zieladresse für das Endgerät 14' vergeben wird, um dieses eindeutig als Kommunikationspartner für das Eingabegerät 13' festzulegen.

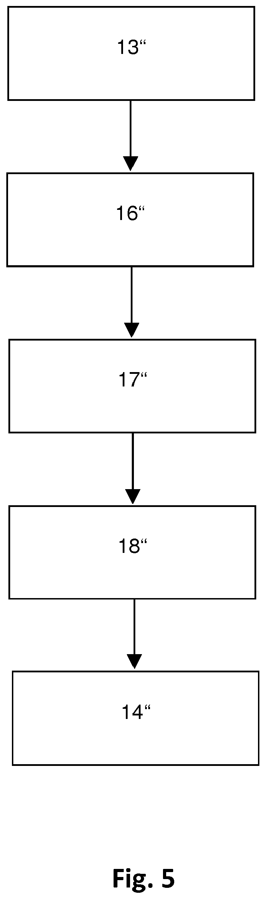

Fig. 5 zeigt schematisch eine Kommunikation über das Feldbusprotokoll, wobei ein Broadcast-Telegramm bzw. ein Broadcast oder System Broadcast zur Adressierung verwendet wird.

Ein Eingabegerät 13" kann ein Kommunikationsmedium nutzen, um über einen Zugangspunkt 16" eine Verbindung mit dem Endgerät 14" herzustellen. Das Eingabegerät 13" kann einen Medienkoppler 17" nutzen, um eine Verbindung mit dem Endgerät 14" herzustellen. Das Eingabegerät 13" kann einen feldbusspezifischen Koppler 18" nutzen, um eine Verbindung mit dem Endgerät 14" herzustellen. Über eine Feldbusadressierung kann eine Verbindung zum Endgerät 14" hergestellt werden. Die Feldbusadressierung erfolgt unter Nutzung von herstellerspezifischen Fernsteuerdaten und eines Broadcast-Telegramms bzw. eines Broadcasts oder System Broadcasts zur Adressierung.

Insoweit erfolgt das Herstellen der Verbindung, indem ein Broadcast-Telegramm versendet wird. Das Herstellen der Verbindung erfolgt bevorzugt, indem die Seriennummer des Endgeräts 14" verwendet wird, um dieses eindeutig als Kommunikationspartner für das Eingabegerät 13" festzulegen.

### Bezugszeichenliste

- 13, 13', 13": Eingabegerät
- 14, 14', 14": Endgerät
- 16, 16', 16": Zugangspunkt
- 17, 17', 17": Medienkoppler
- 18, 18', 18": feldbusspez. Koppler

## Patentansprüche

1. Verfahren zum Bedienen, Einrichten, Inbetriebnehmen und/ oder Testen eines Endgeräts (14, 14', 14"), welches in der Gebäudetechnik verwendet wird, umfassend die folgenden Schritte:
Herstellen einer Verbindung zwischen einem Endgerät (14, 14', 14") und einem von diesem separierten Eingabegerät (13, 13', 13") mit einer Handbedienung, Bedienen der Handbedienung, um das Endgerät (14, 14', 14") von einem Bedienort aus fernzusteuern und zu bedienen, der vom Aufstellort des Endgeräts (14, 14', 14") entfernt ist,
**dadurch gekennzeichnet, dass** das Herstellen der Verbindung erfolgt, indem die Seriennummer eines Endgeräts (14, 14', 14") verwendet wird, um dieses eindeutig als Kommunikationspartner für das Eingabegerät (13, 13', 13") festzulegen, wobei das Herstellen der Verbindung erfolgt, wenn sich die Zieladressen von Endgeräten in einer Anlage noch nicht unterscheiden, wohl aber deren Seriennummern, indem eine Broadcast-Kommunikation versendet wird, welche eine herstellerspezifische Kommunikationserweiterung zur Adressierung des Endgeräts (14, 14', 14") verwendet, wobei als Adresserweiterung die Seriennummer des Endgeräts (14, 14', 14") verwendet wird.

2. Verfahren nach Anspruch 1, **dadurch gekennzeichnet, dass** das Herstellen der Verbindung erfolgt, indem in das Eingabegerät (13, 13', 13") die Seriennummer des Endgeräts (14, 14', 14") manuell eingegeben wird.

3. Verfahren nach einem der voranstehenden Ansprüche, **dadurch gekennzeichnet, dass** die Seriennummer des Endgeräts (14, 14', 14") vom Eingabegerät (13, 13', 13") ausgelesen wird, indem ein Barcode erfasst wird.

4. Verfahren nach einem der voranstehenden Ansprüche, **dadurch gekennzeichnet, dass** das Herstellen der Verbindung erfolgt, indem als Broadcast-Kommunikation ein Broadcast-Telegramm versendet wird.

5. Verfahren nach einem der voranstehenden Ansprüche, **dadurch gekennzeichnet, dass** das Herstellen der Verbindung erfolgt, indem mindestens ein Kommunikationsmedium verwendet wird, das im Eingabegerät (13, 13', 13") vorgesehen ist, und/ oder dass das Herstellen der Verbindung erfolgt, indem ein Medienkoppler (17, 17', 17") verwendet wird.

## Claims

1. Method for operating, setting up, commissioning and/or testing a terminal (14, 14', 14'') that is used in buildings engineering, comprising the following steps:
making a connection between a terminal (14, 14', 14'') and an input device (13, 13', 13"), which is separate from said terminal, using a hand-held control, operating the hand-held control in order to remotely control and operate the terminal (14, 14', 14'') from an operating location, which is remote from the installation location of the terminal (14, 14', 14"),
**characterized in that** the connection is made by using the serial number of a terminal (14, 14', 14'') to uniquely define said terminal as a communication partner for the input device (13, 13', 13"), the connection being made, if the destination addresses of terminals in a system do not yet differ, yet the serial numbers of said terminals do, by sending a broadcast communication that uses a manufacturer-specific communication extension for addressing the terminal (14, 14', 14"), the serial number of the terminal (14, 14', 14'') being used as an address extension.

2. Method according to Claim 1, **characterized in that** the connection is made by manually entering the serial number of the terminal (14, 14', 14'') into the input device (13, 13', 13'').

3. Method according to either of the preceding claims, **characterized in that** the serial number of the terminal (14, 14', 14'') is read by the input device (13, 13', 13'') by acquiring a barcode.

4. Method according to one of the preceding claims, **characterized in that** the connection is made by sending a broadcast telegram as the broadcast communication.

5. Method according to one of the preceding claims, **characterized in that** the connection is made by using at least one communication medium provided in the input device (13, 13', 13''), and/or **in that** the connection is made by using a media coupler (17, 17', 17").

## Revendications

1. Procédé pour manipuler, régler, mettre en service et/ou tester un terminal (14, 14', 14"), lequel est utilisé dans la technique du bâtiment, comprenant les étapes suivantes :
établissement d'une connexion entre un terminal (14, 14', 14") et un appareil de saisie (13, 13', 13") séparé de celui-ci pourvu d'une commande manuelle, manipulation de la commande manuelle pour commander à distance et manipuler le terminal (14, 14', 14") depuis un lieu de manipulation qui est éloigné du lieu d'installation du terminal (14, 14', 14"),
**caractérisé en ce que** l'établissement de la connexion est effectué en utilisant le numéro de série d'un terminal (14, 14', 14") afin de spécifier celui-ci univoquement comme partenaire de communication pour l'appareil de saisie (13, 13', 13"), l'établissement de la connexion ayant lieu lorsque les adresses de destination des terminaux dans une installation ne diffèrent pas encore, mais que leurs numéros de série diffèrent, en envoyant une communication de diffusion qui utilise une extension de communication spécifique au fabricant pour l'adressage du terminal (14, 14', 14"), le numéro de série du terminal (14, 14', 14'') étant utilisé comme extension d'adresse.

2. Procédé selon la revendication 1, **caractérisé en ce que** l'établissement de la connexion s'effectue en saisissant manuellement le numéro de série du terminal (14, 14', 14'') dans l'appareil de saisie (13, 13', 13").

3. Procédé selon l'une des revendications précédentes, **caractérisé en ce que** le numéro de série du terminal (14, 14', 14'') est lu par l'appareil de saisie (13, 13', 13") en capturant un code à barres.

4. Procédé selon l'une des revendications précédentes, **caractérisé en ce que** l'établissement de la connexion s'effectue en envoyant un télégramme de diffusion en tant que communication de diffusion.

5. Procédé selon l'une des revendications précédentes, **caractérisé en ce que** l'établissement de la connexion s'effectue en utilisant au moins un support de communication qui est prévu dans l'appareil de saisie (13, 13', 13") et/ou **en ce que** l'établissement de la connexion s'effectue en utilisant un coupleur de supports (17, 17', 17'').
